# EUROPEAN PATENT SPECIFICATION

(11) **EP 2 864 868 B1**
(45) Date of publication and mention of the grant of the patent: **01.01.2020**
(21) Application number: 13735505.3
(22) Date of filing: 21.06.2013
(51) Int. Cl.: G06F 9/38

(54) **METHODS AND APPARATUS TO EXTEND SOFTWARE BRANCH TARGET HINTS**
VERFAHREN UND VORRICHTUNG ZUR VERLÄNGERUNG VON ZIELHINWEISEN EINES SOFTWAREZWEIGS
PROCÉDÉS ET APPAREIL POUR ÉTENDRE DES INDICATIONS CIBLES DE BRANCHE LOGICIELLE

(30) Priority: 25.06.2012 US 201213531920
(43) Date of publication of application: 29.04.2015
(73) Proprietor: Qualcomm Incorporated, San Diego, CA 92121 (US)
(72) Inventor: REDDY, Vimal K., San Diego, California 92121 (US)
(74) Representative: Tomkins & Co
(86) International application number: PCT/US2013/046975
(87) International publication number: WO 2014/004272

(56) References cited:
- WO-A1-03/003195
- WO-A2-2007/042482
- US-A1- 2011 320 787

## Description

### Field of the Invention

The present invention relates generally to techniques for processing instructions in a processor pipeline and more specifically to techniques for generating an early indication of a target address for an indirect branch instruction.

### Background of the Invention

Many portable products, such as cell phones, laptop computers, personal data assistants (PDAs) or the like, use a processing system having at least one processor, a source of instructions, a source of input operands, and storage space for storing results of execution. For example, the instructions and input operands may be stored in a hierarchical memory configuration consisting of general purpose registers and multi-levels of caches, including, for example, an instruction cache, a data cache, and system memory.

In order to provide high performance in the execution of programs, the processor may use speculative execution to fetch and execute instructions beginning at a predicted branch target address. If the branch target address is mispredicted, the speculatively executed instructions must be flushed from the pipeline and the pipeline restarted at a different address. In many processor instruction sets, there is often an instruction that branches to a program destination address that is derived from the contents of a register. Such an instruction is generally named an indirect branch instruction. Due to the indirect branch dependence on the contents of a register, it is usually difficult to predict the branch target address since the register may have a different value each time the indirect branch instruction is executed. Since correcting a mispredicted indirect branch generally requires back tracking to the indirect branch instruction in order to fetch and execute the instruction on the correct branching path, the performance of the processor can be reduced thereby. Also, a misprediction indicates the processor incorrectly speculatively fetched and began processing of instructions on the wrong branching path causing an increase in power both for processing of instructions which are not used and for flushing them from the pipeline. Wo2007042482 discloses a branch target address predicting method involving obtaining a predictor value for target address.

### Summary of Invention

Among its several aspects, the present invention recognizes that performance can be improved by minimizing mispredictions of indirect branch instructions. A first embodiment of the invention recognizes that a need exists for a method which predicts a storage address based on contents of a first program accessible register (PAR) specified in a first instruction, wherein the first PAR correlates with a target address specified by a second PAR in a second instruction. Information is speculatively fetched at the predicted storage address prior to execution of the second instruction.

Another embodiment addresses a method which predicts an evaluation result to branch to a target address for a branch instruction, wherein the prediction is based on a program accessible register (PAR) specified in a first instruction and the specified PAR correlates with a taken evaluation of the branch instruction. Instructions are speculatively fetched at the target address prior to execution of the branch instruction.

Another embodiment addresses an apparatus for speculatively fetching instructions. A first program accessible register (PAR) is configured to store a value that correlates to a target address specified in a branch instruction and a second PAR is configured to store the target address for the branch instruction. A decode circuit is configured to identify the first PAR specified in an advance correlating notice (ADVCN) instruction and to identify the second PAR specified in a branch instruction. A prediction circuit is configured to predict a storage address based on the value in response to the ADVCN instruction, wherein the value stored in the first PAR correlates with the target address identified by the second PAR. A fetch circuit is configured to speculatively fetch instructions beginning at the predicted storage address prior to execution of the branch instruction.

Another embodiment addresses a computer readable non-transitory medium encoded with computer readable program data and code for operating a system. A storage address is predicted based on contents of a first program accessible register (PAR) specified in a first instruction, wherein the first PAR correlates with a target address specified by a second PAR in a second instruction. Information at the predicted storage address is speculatively fetched prior to execution of the second instruction.

A further embodiment addresses an apparatus for speculatively fetching instructions. Means is employed for storing a value that correlates to a target address specified in a branch instruction and a second PAR configurable to store the target address for the branch instruction. Means for identifying the first PAR specified in an advance correlating notice (ADVCN) instruction and for identifying the second PAR specified in a branch instruction is also employed. Further, means is employed for predicting a storage address based on the value in response to the ADVCN instruction, wherein the value stored in the first PAR correlates with the target address identified by the second PAR. Means for speculatively fetching instructions beginning at the predicted storage address prior to execution of the branch instruction.

A more complete understanding of the present invention, as well as further features and advantages of the invention, will be apparent from the following Detailed Description and the accompanying drawings.

### BRIEF DESCRIPTION OF THE DRAWINGS

FIG. 1 illustrates of an exemplary wireless communication system in which an embodiment of the invention may be advantageously employed;
FIG. 2 is a functional block diagram of a processor complex which supports branch target addresses for indirect branch instructions in accordance with an embodiment of the invention;
FIG. 3A is a general format for a 32-bit advance correlating notification (ADVCN) instruction that specifies a register identified by a programmer or a software tool whose contents correlate to an indirect branch target address value generated from a different register in accordance with an embodiment of the invention;
FIG. 3B is a general format for a 16-bit ADVCN instruction that specifies a register that correlates to an indirect branch target address value in accordance with an embodiment of the invention;
FIG. 4A is a first code example for an approach to indirect branch prediction using a history of prior indirect branch executions;
FIB. 4B is a second code example for an approach to indirect branch notification using a Hint instruction to aid in predicting an indirect branch target address;
FIG. 4C is a third code example for an approach to indirect branch advance notification using the ADVCN instruction of FIG. 3A for providing an advance notice of a register that correlates to an indirect branch target address in accordance with an embodiment of the invention;
FIG. 4D is a fourth code example for an approach to indirect branch advance notification using the ADVCN instruction of FIG. 3A for providing an advance notice of a register that correlates to a taken indirect branch target address in accordance with an embodiment of the invention;
FIG. 5 illustrates an exemplary first indirect branch target address (BTA) advance correlating notification circuit in accordance with an embodiment of the invention; and {0019} FIG. 6 illustrates an advance correlating notification (ADVCN) process utilized to predict a branch target address of an indirect branch instruction in accordance with an embodiment of the invention.

### DETAILED DESCRIPTION

The present invention will now be described more fully with reference to the accompanying drawings, in which several embodiments of the invention are shown. This invention may, however, be embodied in various forms and should not be construed as limited to the embodiments set forth herein. Rather, these embodiments are provided so that this disclosure will be thorough and complete, and will fully convey the scope of the invention to those skilled in the art.

Computer program code or "program code" for being operated upon or for carrying out operations according to the teachings of the invention may be written in a high level programming language such as C, C++, JAVA®, Smalltalk, JavaScript®, Visual Basic®, TSQL, Perl, or in various other programming languages. Programs for the target processor architecture may also be written directly in the native assembler language. A native assembler program uses instruction mnemonic representations of machine level binary instructions. Program code or computer readable non-transitory medium as used herein refers to machine language code such as object code whose format is understandable by a processor.

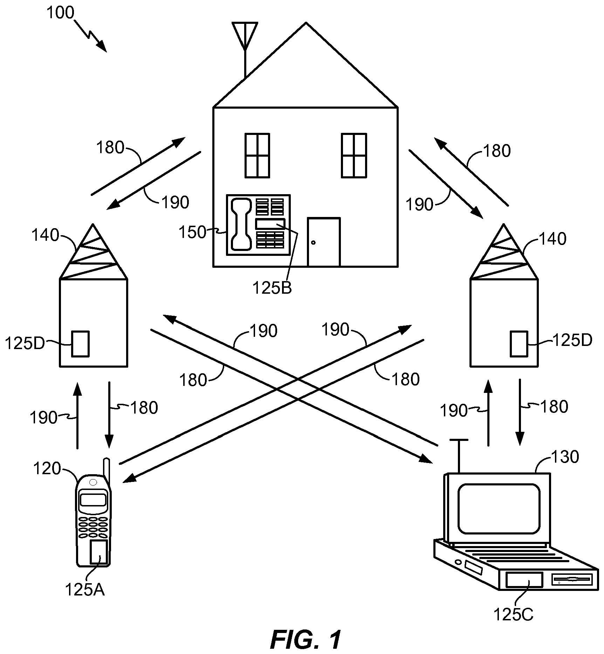

FIG. 1 illustrates an exemplary wireless communication system 100 in which an embodiment of the invention may be advantageously employed. For purposes of illustration, FIG. 1 shows three remote units 120, 130, and 150 and two base stations 140. It will be recognized that common wireless communication systems may have many more remote units and base stations. Remote units 120, 130, 150, and base stations 140 which include hardware components, software components, or both as represented by components 125A, 125C, 125B, and 125D, respectively, have been adapted to incorporate embodiments of the invention as discussed further below. FIG. 1 shows forward link signals 180 from the base stations 140 to the remote units 120, 130, and 150 and reverse link signals 190 from the remote units 120, 130, and 150 to the base stations 140.

In FIG. 1, remote unit 120 is shown as a mobile telephone, remote unit 130 is shown as a portable computer, and remote unit 150 is shown as a fixed location remote unit in a wireless local loop system. By way of example, the remote units may alternatively be cell phones, smart phones, pagers, walkie talkies, handheld personal communication system (PCS) units, tablets, portable data units such as personal data assistants, or fixed location data units such as meter reading equipment. Although FIG. 1 illustrates remote units according to the teachings of the disclosure, the disclosure is not limited to these exemplary illustrated units. Embodiments of the invention may be suitably employed in any device using a processor that executes indirect branch instructions.

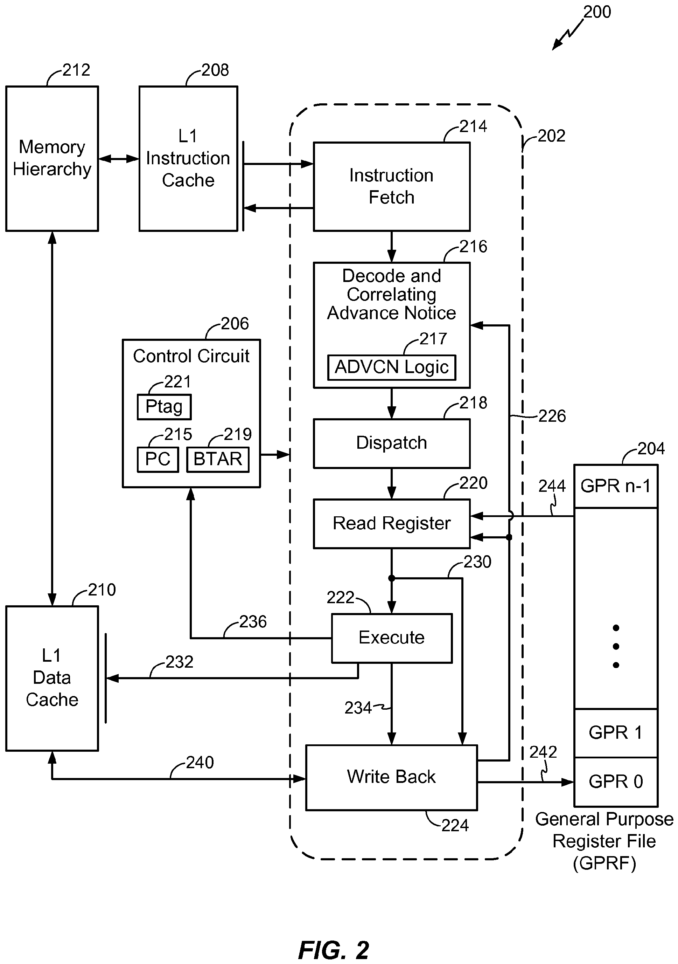

FIG. 2 is a functional block diagram of a processor complex 200 which supports preparing advance notice of branch target addresses for indirect branch instructions in accordance with the present invention. The processor complex 200 includes processor pipeline 202, a general purpose register file (GPRF) 204, a control circuit 206, an L1 instruction cache 208, an L1 data cache 210, and a memory hierarchy 212. The control circuit 206 includes a program counter (PC) 215, a branch target address register (BTAR) 219, and a prediction tag (Ptag) 221 which interact as described in more detail below for the purposes of controlling the processor pipeline 202 including the instruction fetch stage 214. Peripheral devices which may connect to the processor complex are not shown for clarity of discussion. The processor complex 200 may be suitably employed in hardware components 125A-125D of FIG. 1 for executing program code that is stored in the L1 instruction cache 208, utilizing data stored in the L1 data cache 210, and associated with the memory hierarchy 212. The processor pipeline 202 may be operative in a general purpose processor, a digital signal processor (DSP), an application specific processor (ASP) or the like. The various components of the processing complex 200 may be implemented using application specific integrated circuit (ASIC) technology, field programmable gate array (FPGA) technology, or other programmable logic, discrete gate or transistor logic, or any other available technology suitable for an intended application.

The processor pipeline 202 includes six major stages, an instruction fetch stage 214, a decode and advance correlating notification (ADVCN) stage 216, a dispatch stage 218, a read register stage 220, an execute stage 222, and a write back stage 224. Though a single processor pipeline 202 is shown, the processing of instructions with indirect branch target address advance notification of the present invention is applicable to super scalar designs and other architectures implementing parallel pipelines. For example, a super scalar processor designed for high clock rates may have two or more parallel pipelines and each pipeline may divide the instruction fetch stage 214, the decode and ADVCN stage 216 having an ADVCN logic circuit 217, the dispatch stage 218, the read register stage 220, the execute stage 222, and the write back stage 224 into two or more pipelined stages increasing the overall processor pipeline depth in order to support a high clock rate.

Beginning with the first stage of the processor pipeline 202, the instruction fetch stage 214, associated with a program counter (PC) 215, fetches instructions from the L1 instruction cache 208 for processing by later stages. If an instruction fetch misses in the L1 instruction cache 208, meaning that the instruction to be fetched is not in the L1 instruction cache 208, the instruction is fetched from the memory hierarchy 212 which may include multiple levels of cache, such as a level 2 (L2) cache, and main memory. Instructions may be loaded to the memory hierarchy 212 from other sources, such as a boot read only memory (ROM), a hard drive, an optical disk, or from an external interface, such as, the Internet. A fetched instruction then is decoded in the decode and ADVCN stage 216 with the ADVCN logic circuit 217 providing additional capabilities for advance notification of a register that correlates to an indirect branch target address value as described in more detail below. Associated with ADVCN logic circuit 217 is a branch target address register (BTAR) 219 and the Ptag circuit 221 which may be located in the control circuit 206 as shown in FIG. 2, though not limited to such placement. For example, the BTAR 219 and Ptag circuit 221 may suitably be located within the decode and ADVCN stage 216.

The dispatch stage 218 takes one or more decoded instructions and dispatches them to one or more instruction pipelines, such as utilized, for example, in a superscalar or a multi-threaded processor. The read register stage 220 fetches data operands from the GPRF 204 or receives data operands from a forwarding network 226. The forwarding network 226 provides a fast path around the GPRF 204 to supply result operands as soon as they are available from the execution stages. Even with a forwarding network, result operands from a deep execution pipeline may take three or more execution cycles. During these cycles, an instruction in the read register stage 220 that requires result operand data from the execution pipeline, must wait until the result operand is available. The execute stage 222 executes the dispatched instruction and the write-back stage 224 writes the result to the GPRF 204 and may also send the results back to read register stage 220 through the forwarding network 226 if the result is to be used in a following instruction. Since results may be received in the write back stage 224 out of order compared to the program order, the write back stage 224 uses processor facilities to preserve the program order when writing results to the GPRF 204. A more detailed description of the processor pipeline 202 for providing advance notice of a register that correlates to the target address of an indirect branch instruction is provided below with detailed code examples.

The processor complex 200 may be configured to execute instructions under control of a program stored on a computer readable storage medium. For example, a computer readable storage medium may be either directly associated locally with the processor complex 200, such as may be available from the L1 instruction cache 208, for operation on data obtained from the L1 data cache 210, and the memory hierarchy 212 or through, for example, an input/output interface (not shown). The processor complex 200 also accesses data from the L1 data cache 210 and the memory hierarchy 212 in the execution of a program. The computer readable storage medium may include random access memory (RAM), dynamic random access memory (DRAM), synchronous dynamic random access memory (SDRAM), flash memory, read only memory (ROM), programmable read only memory (PROM), erasable programmable read only memory (EPROM), electrically erasable programmable read only memory (EEPROM), compact disk (CD), digital video disk (DVD), other types of removable disks, or any other suitable storage medium.

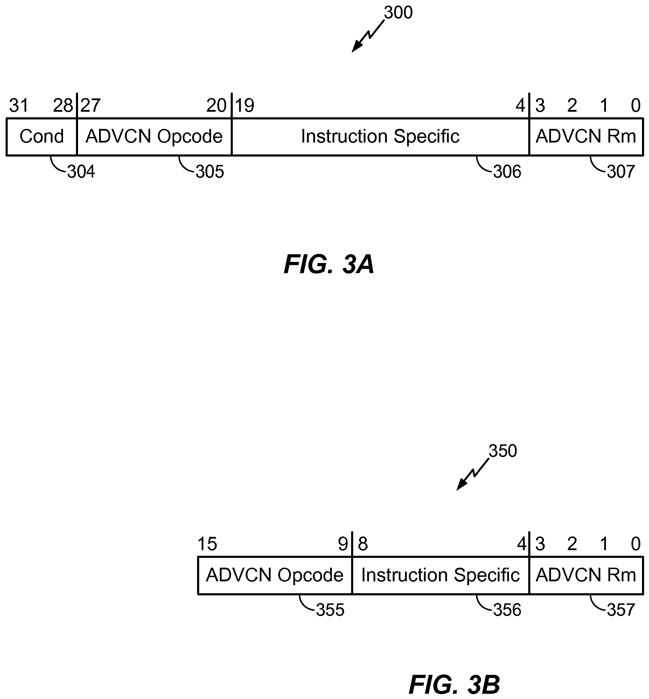

FIG. 3A is a general format for a 32-bit ADVCN instruction 300 that specifies a register identified by a programmer or a software tool whose contents correlate to an indirect branch target address value generated from a different register in accordance with the present invention. The ADVCN instruction 300 notifies the processor complex 200 of a register that correlates with an actual branch target address in advance of an upcoming indirect branch instruction. By providing the advance notification, as described in more detail below, processor performance may be improved. The ADVCN instruction 300 is illustrated with a condition code field 304 as utilized by a number of instruction set architectures (ISAs) to specify whether the instruction is to be executed unconditionally or conditionally based on a specified flag or flags. An opcode 305 identifies the instruction as an ADVCN instruction having at least a register field, ADVCN Rm 307 that correlates to a branch target address. An instruction specific field 306 allows for opcode extensions and other instruction specific encodings. In processors having an ISA with instructions that conditionally execute according to a specified condition code field in the instruction, the last instruction that may affect the branch target address register Rm prior to the branch instruction may be conditionally executed. In many such cases, the condition code field of such an Rm affecting instruction would be coded with the same condition field used for the ADVCN instruction, though not limited to such a specification, allowing a branch history approach be used to predict whether the branch will be taken or not taken and the associated target address.

The teachings of the invention are applicable to a variety of instruction formats and architectural specification. For example, FIG. 3B is a general format for a 16-bit ADVCN instruction 350 that specifies at least a register field, ADVCN Rm 357 that correlates to a branch target address value in accordance with the present invention. The 16-bit ADVCN instruction 350 is similar to the 32-bit ADVCN instruction 300 having an opcode 355, a register field ADVCN Rm 357, and instruction specific bits 356. It is also noted that other bit formats and instruction widths may be utilized to encode an ADVCN instruction.

General forms of indirect branch type instructions may be advantageously employed and executed in processor pipeline 202, for example, branch on register Rx (BX), add PC, move Rx PC, and the like. For purposes of describing the present invention the BX Rx form of an indirect branch instruction is used in code sequence examples as described further below.

It is noted that other forms of branch instructions are generally provided in an ISA, such as a branch instruction having a BTA calculated as a sum of an instruction specified offset address and a base address register, and the like. In support of such branch instructions, the processor pipeline 202 may utilize branch history prediction techniques that are based on tracking, for example, conditional execution status of prior branch instruction executions and storing such execution status for use in predicting future execution of these instructions. The processor pipeline 202 may support such branch history prediction techniques and additionally support the use of the ADVCN instruction to provide advance notification of a register that correlates to an indirect branch target address. For example, the processor pipeline 202 may use the branch history prediction techniques until an ADVCN instruction is encountered which then overrides the branch target history prediction techniques using the ADVCN facilities as described herein.

In other embodiments of the present invention, the processor pipeline 202 may also be set up to monitor the accuracy of using the ADVCN instruction and when the ADVCN correlated target address was incorrectly predicted one or more times, to ignore the ADVCN instruction for subsequent encounters of the same indirect branch. It is also noted that for a particular implementation of a processor supporting an ISA having an ADVCN instruction, the processor may treat an encountered ADVCN instruction as a no operation (NOP) instruction or flag the detected ADVCN instruction as undefined. Further, an ADVCN instruction may be treated as a NOP in a processor pipeline having a dynamic branch history prediction circuit with sufficient hardware resources to track branches encountered during execution of a section of code and enable the ADVCN instruction as described below for sections of code which exceed the hardware resources available to the dynamic branch history prediction circuit. Also, the ADVCN instruction may be used in conjunction with a dynamic branch history prediction circuit for providing advance notice of a register that correlates to an indirect branch target address where the dynamic branch history prediction circuit has poor results for predicting indirect branch target addresses. For example, a predicted branch target address generated from a dynamic branch history prediction circuit may be overridden by a target address provided through the use of an ADVCN instruction. In addition, advantageous automatic indirect-target inference methods are presented for providing advance notification of the indirect branch target address as described below.

When a processor encounters an indirect branch instruction, the processor determines whether to branch or not and also determines a target address of the branch based on the dynamic state of the processor. An indirect branch instruction is generally encoded with a program accessible register (PAR), such as a register from a general purpose register (GPR) file or other program accessible storage location, which contains a branch target address. Thus, a first program accessible register (PAR), such as a register from a general purpose register (GPR) file or other program accessible storage location, is specified in a first instruction to predict a target address based on a second PAR specified by a second instruction. The first PAR correlates with the target address specified by the second PAR. Also, a PAR is specified in a first instruction to predict an evaluation result to branch to a target address specified in a branch instruction. The specified PAR correlates with a taken evaluation of the branch instruction. Also, the processor branches based on a condition being met, such as whether a registered value is equal to, not equal to, greater than, or less than another registered value. Since the indirect branch instruction may change the flow of sequential addressing in a program, a pipelined processor generally stalls fetching instructions until it can be determined whether the branch will be taken or not taken and if taken to what target address. If a branch is determined to be not taken, the branch "falls through" and an instruction at the next sequential address following the branch is fetched. Accurately predicting whether to branch and predicting the branch target address are difficult problems.

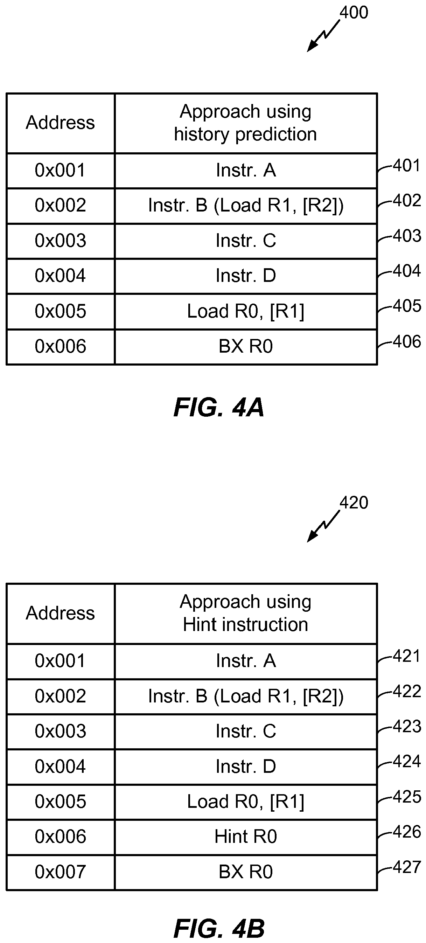

FIG. 4A is a first code example 400 for an approach to indirect branch prediction that uses a general history approach for predicting indirect branch executions if no ADVCN instruction is encountered. The execution of the code example 400 is described with reference to the processor complex 200. Instructions A-D 401-404 may be a set of sequential arithmetic instructions, for purposes of this example, that, based on an analysis of the instructions A-D 401-404, do not affect the register RO in the GPRF 204. Register RO is loaded by the load RO instruction 405 with the target address for the indirect branch instruction BX RO 406. Each of the instructions 401-406 are specified to be unconditionally executed, for purposes of this example. It is also assumed that the load RO instruction 405 is available in the L1 instruction cache 208, such that when instruction A 401 completes execution in the execute stage 222, the load RO instruction 405 has been fetched in the fetch stage 214. The indirect branch BX RO instruction 406 is then fetched while the load RO instruction 405 is decoded in the decode and ADVCN stage 216. In the next pipeline stage, the load RO instruction 405 is prepared to be dispatched for execution and the BX RO instruction 406 is decoded. Also, in the decode and ADVCN stage 216, a prediction is made based on a history of prior indirect branch executions whether the BX RO instruction 406 is taken or not taken, and if possible, a target address for the indirect branch is also predicted. For this example, the BX RO instruction 406 is predicted to be "taken" and the ADVCN logic circuit 217 is only required to predict the indirect branch target address as address X. The ADVCN logic circuit 217 cannot predict the target address in all cases. To make a prediction, a hash key is generated using the prior branch direction history and the current instruction address. For example, an exemplary hash key is equal to XOR(Current_Instruction_Address, Prior_Branch_Direction_History) as described in more detail below. The hash key which is the Ptag is then looked up in a prediction table to see if there has been a prior instance of this branch/history combination, and if so, the target address stored in the entry associated with the prior instance is used to predict an indirect branch target address. If however, the hash key is not found in the prediction table, a prediction is not possible and fetching of instructions is stalled. The pipeline stall continues until the indirect branch instruction flows down to the execution stage and executes. Thereafter, the correct target address generated in the execution stage is sent to the fetch stage and the stall is removed. If a prediction is possible, the pipeline is not stalled, and based on this prediction, the processor pipeline 202 is directed to begin speculatively fetching instructions beginning from the predicted address X. For a "taken" status, the predicted address X is generally a redirection from the current instruction addressing. The processor pipeline 202 also flushes any instruction in the pipeline following the indirect branch BX RO instruction 406, if those instructions are not associated with the instructions beginning at address X.

The processor pipeline 202 continues to fetch instructions until it can be determined in the execute stage whether the predicted address X was correctly predicted. A disadvantage with a history based approach is a general inaccuracy of the prediction for different types of code, as observed in practice using the combination of branch execution history and current instruction address. This inaccuracy of predicting is due to an inherent unpredictability of certain branch target addresses based on past observations. Mispredictions are costly, as it takes multiple cycles to find a misprediction waiting until the branch executes, and the processor pipeline is essentially stalled or doing work during those cycles which would be flushed.

FIG. 4B is a second code example 420 for an approach to indirect branch advance notification using a hint instruction to aid in predicting an indirect branch target address. Based on the previously noted analysis of the instructions A-D 401-404 of FIG. 4A, instructions A-D 421-424 of FIG. 4B do not affect the branch target address register R0, the load R0 instruction 425 could be placed higher up in the instruction sequence, for example, to be placed after instruction A 421. Also, a software hint instruction 426 may be placed in the program 420 prior to the indirect branch instruction BX RO 427 to identify the associated branch target address. The usefulness of the software hint 426 depends in part upon how early the branch target address hint instruction 426 can be supplied before the indirect branch is encountered. In many cases, due to data hazards with previous instructions in a code sequence, for example, the software hint instruction 426 cannot be supplied until immediately before the indirect branch instruction BX RO 427, as shown in Fig. 4B.

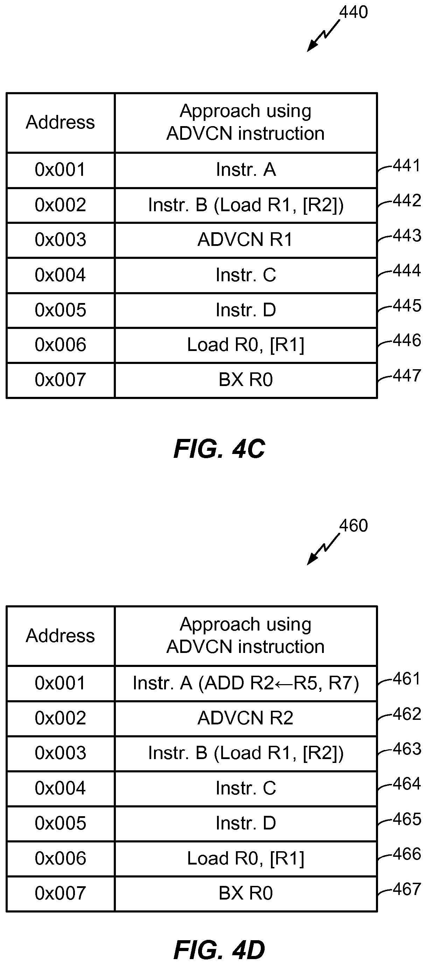

To address such difficulties, an evaluation of whether to branch or not to branch may be dynamically determined by specifying a register that correlates with such an evaluation result. Also, the branch target address may be dynamically determined by specifying a register that correlates with the target address rather than waiting for the target address encoded within the branch instruction to be resolved in the processor pipeline. While, standard branch prediction techniques, such as described with regard to FIG. 4A above, may be used, such techniques may also have a high level of misprediction dependent on the program in execution. One approach to minimize mispredicting indirect branch instructions is shown with respect to a third code example 440 of FIG. 4C.

FIG. 4C is a third code example 440 for an approach to indirect branch advance notification using the ADVCN instruction 300 of FIG. 3A for providing an advance notice of a register that correlates to an indirect branch target address. The use of the ADVCN instruction 300, improves processor performance by minimizing mispredictions, and improves power use by having more accurate predictions. Rather than directly indicating a register that is identified by the indirect branch instruction as holding the target address, a value, such as another register is used that correlates with the target address. For example, in Fig. 4C, a value stored in register R1 of instructions B 442 and Load R0, [R1] 446 is correlated with a target address value stored in register R0 used by the branch BX R0 instruction 447. The value of R1 correlates to the value of R0 for the BX R instruction 447. In another example shown in a fourth code example 460 of FIG. 4D, the value stored in register R2 of instruction B 463 is correlated with the target address value stored in register RO indirectly through R1. The value of R2 correlates indirectly through the value of R1 to the value of RO for the BX RO instruction 447. In code example 440 of FIG. 4C and code example 460 of FIG. 4D, an ADVCN instruction 443 in FIG. 4C and 463 in FIG. 4D supplies a correlation value that affects the production of the branch target address used by the branch instruction, which in these examples is stored in RO. The ADVCN instruction may be used to predict an evaluation result to branch to a target address for a branch instruction, wherein the prediction is based on a program accessible register (PAR) specified in a first instruction and the specified PAR correlates with a taken evaluation of the branch instruction.

As the new instruction sequence 441-447 of FIG. 4C flows through the processor pipeline 202, the ADVCN R1 instruction 443 will be in the read stage 220 when the load R1 [R2] instruction 442 is in the execute stage 222 and the Load RO [R1] instruction 446 will be in the fetch stage 214. It is desirable to determine the R1 value prior to the indirect branch instruction BX RO 447 entering the decode and ADVCN stage 216 to allow the ADVCN logic circuit 217 to use the advance notice R1 value to make the prediction of the branch target address for the BX RO instruction 447 without any additional cycle delay. It is noted that the BX RO instruction 447 is dynamically identified in the pipeline. The value stored in the ADVCN instruction 443 specified register, such as the contents of R1 in the code example in Fig 4C or the contents of R2 in the code example in Fig 4D, is used in the ADVCN logic circuit 217 as an input to a hash function to generate a hash key. The hash key is then looked up in a prediction table to see if there has been a prior instance, and if so, the target address stored in the entry associated with the prior instance is used to predict an indirect branch target address. The advance correlating notice value provided by the ADVCN instruction is an input to the hash function. An exemplary hash function is XOR(Current instruction address, ADVCN Rm value). Another one is XOR(Current instruction address, ADVCN Rm value, History). There are many alternative hash functions which may be evaluated and used. If the resulting hash key is not found in the prediction table, a prediction is not possible and fetching of instructions is stalled. The pipeline stall continues until the indirect branch instruction flows down to the execution stage and executes. Thereafter, the correct target address generated in the execution stage is sent to the fetch stage and the stall is removed. If a prediction is possible, the pipeline is not stalled, and based on this prediction, the processor pipeline 202 is directed to begin speculatively fetching instructions beginning from the predicted address X.

It is noted that for the processor pipeline 202, the load R1 [R2] instruction 442 and the ADVCN R1 instruction 443 have been placed after instruction A 441 without causing any further delay for the case where there is a hit in the L1 data cache 210. However, if there was a miss in the L1 data cache, a stall situation would be initiated. For this case of a miss in the L1 data cache 210, the load R1 [R2] and ADVCN R1 instructions would need to have been placed, if possible, an appropriate number of miss delay cycles before the BX RO instruction based on the pipeline depth to avoid causing any further delays. It is also noted that instructions C 444 and D 445 do not affect the value stored in register R1.

Generally, placement of the ADVCN instructions in a code sequence is preferred to be N instructions before the BX instruction. In the context of a processor pipeline, N represents the number of stages between a stage that receives the indirect branch instruction and a stage that recognizes the contents of the ADVCN specified register that correlates to the branch target address, such as the instruction fetch stage 214 and the execute stage 222. In the exemplary processor pipeline 202 with use of the forwarding network 226, N is two and, without use of the forwarding network 226, N is three. For processor pipelines using a forwarding network for example, if the BX instruction is preceded by N equal to two instructions before the ADVCN instruction, then the ADVCN register Rm value is determined at the end of the read register stage 220 due to the forwarding network 226. In an alternate embodiment for a processor pipeline not using a forwarding network 226 for ADVCN instruction use, for example, if the BX instruction is preceded by N equal to three instructions before the ADVCN instruction, then the ADVCN target address register Rm value is determined at the end of the execute stage 222 as the BX instruction enters the decode and ADVCN stage 216. The number of instructions N may also depend on additional factors, including stalls in the upper pipeline due to delays in the instruction fetch stage 214, instruction issue width which may vary up to K instructions issued in a super scalar processor, and interrupts that come between the ADVCN and the BX instructions, for example.

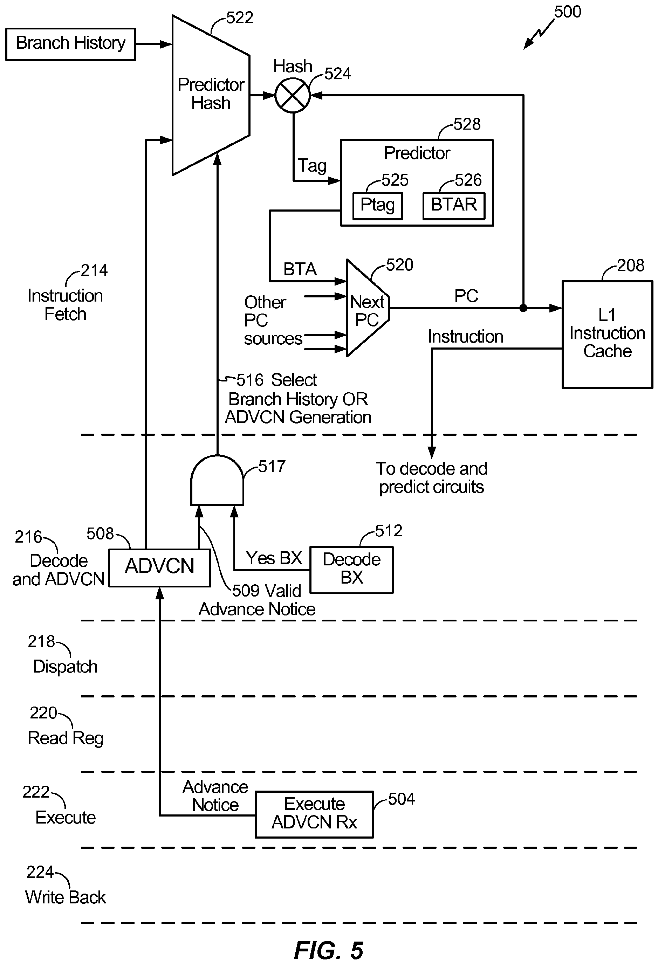

In order to more efficiently use the ADVCN instruction, an instruction set architecture (ISA) may recommend the ADVCN instruction be scheduled as early as possible to minimize the effects of pipeline factors. The ISA may also recommend to not place other branches that can mispredict between the ADVCN instruction and the indirect branch being optimized. The ISA may note that any changes to the value in R1, such as could occur with the intermediate instructions in FIG. 4D between the ADVCN R2 instruction 462 and the Load R0, [R1] instruction 466, may dynamically affect the target address value of RO. However, whether or not such a change impacts the accuracy of a prediction, depends on choices a programmer or software tool made while selecting the ADVCN R2 instruction. For example, if R2 still provides uniqueness and correlates with the value of R0, then the intermediate changes to R1 will not impact the accuracy of the prediction, made with the ADVCN R2 instruction 462. However, if R2 does not correlate, due to the intermediate changes, then the prediction accuracy will not be good. An ADVCN R1 instruction in that case would have been a better choice compared to the ADVCN R2 instruction 462. If there are intermediate instructions changing R1, then the ADVCN R1 instruction should be placed after the earliest instruction changing R1, where R1 is unique and correlates with the target address in RO. Also, in this embodiment, multiple intermediate ADVCN instructions should not generally be used. The circuit as illustrated in FIG. 5 uses the last ADVCN instruction as the correlating value. In another embodiment that supports multiple ADVCN instructions for the same indirect branch, a prediction circuit would use the multiple ADVCN provided Rm advance notice values as inputs to a hash function that produces the Ptag to access the lookup prediction table.

Profiling and code analysis are tools which may be used to analyze which register to pick for Rm in an ADVCN Rm instruction. In profiling, benchmarks can be profiled and a programmer could see which register value an indirect branch's target address correlates with, and choose that register as the operand for the ADVCN instruction. Generally, correlation means a particular register value is unique for a given target address of the indirect branch. In code analysis, a programmer can also use additional tools like dataflow and control flow graphs, to determine which register values are unique with respect to the target address of an indirect branch, and select at least one of those registers as an operand for a particular ADVCN instruction.

While Figs. 4C and 4D are illustrated with a single ADVCN instruction, multiple ADVCN instructions may be instantiated before encountering a string of indirect branches. The multiple ADVCN instructions are applied to next encountered indirect branches in a FIFO fashion, such as may be obtained through the use of a stack apparatus. It is noted that a next encountered indirect branch instruction is, generally, the same as a next indirect branch instruction in program-order. Code which may cause exceptions to this general rule may be evaluated before determining whether the use of multiple ADVCN instructions is appropriate.

FIG. 5 illustrates an exemplary first indirect branch target address (BTA) advance notification circuit 500 in accordance with the present invention. The first indirect BTA advance notification circuit 500 includes an ADVCN execute circuit 504, an ADVCN register circuit 508, a BX decode circuit 512, a select circuit 517, and a next program counter (PC) circuit 520 for responding to inputs that affect generation of a PC address. At the end of execution of the ADVCN instruction in the ADVCN execute circuit 504, the result of that execution is the value of the specified register, such as R1 as specified in ADVCN R1 instruction 443 of FIG. 4C, which is stored in the ADVCN register circuit 508. In an alternative embodiment, the Rm value of the ADVCN instruction may be saved in the read register stage 220. Since the ADVCN instruction is placed prior to the indirect branch instruction, the register value stored in the ADVCN register circuit 508 is held and a valid advance notice indication 509 is asserted. When a BX instruction is decoded in the BX decode circuit 512 and a valid advance notice indication 509 is asserted, a selection signal 516 is generated by the select circuit 517. The advance correlating notice register value from the execution of the ADVCN instruction is used to aid the prediction of a target address, rather than being used directly in "Next PC" circuit 520. A hash function circuit 524 receives the advance correlating notice register value output from the ADVCN register circuit 508 as selected from a prediction source selector 522 and the PC from the next PC circuit 520 to generate a prediction tag (Ptag) 525. The Ptag 525 is looked up in a predictor circuit 528 to find the predicted target address.

The Ptag 525 can either be a hash of the PC and branch history, or a hash of the PC and the advance notice register value. For example, where PC is the current instruction address, a first hash function (hash1) is XOR(PC, ADVCN Rm value) and a second hash function (hash2) is XOR(PC, inverse(ADVCN Rm value)), where inverse is a binary function that reverses the order of a binary input, such as inverse(10011)=11001. Additional examples of hash functions include a third hash function (hash3) that is XOR(PC, History), a fourth hash function (hash4) that is XOR(PC, inverse(History)), and a fifth hash function (hash5) that is XOR(inverse(PC), ADVCN Rm value). Other examples of hash functions include a sixth hash function (hash6) that is XOR(PC, ADVCN Rm(H1)||inverse(ADVCN Rm(HO)), where || is a catenation of the preceding and following binary digits. Other such variations and the like are possible. Generally, a hash function may be defined that extracts uniqueness from one or more input values. It is also noted that a hash function of a history value may be different than a hash function of an ADVCN Rm value. If the ADVCN register value is not available, the Ptag 525 would be generated by use of the branch history, as described with regard to FIG. 4A. If the advance notice register value is available, then the Ptag 525 would be generated by use of the advance notice register value. The predicted target address generated from the Ptag stored in the Ptag register 525 is then stored in the branch target address register (BTAR) 526 from which a branch target address (BTA) is output and selected by nextPC multiplexer 520. Based on a learning function, the Ptag table is updated with the correct target address when a branch is mispredicted. Branch circuitry remembers the hash key which follows an associated branch instruction down the pipeline to the execution stage. The same hash key is used to the update the table or establish an entry if the hash key was initially not found in the Decode/ADVCN stage.

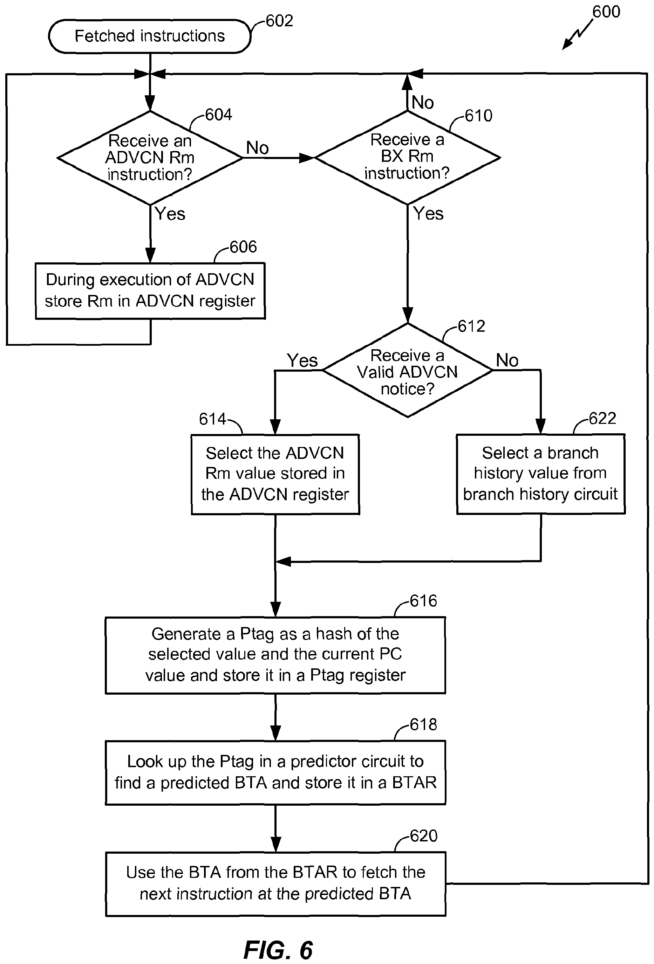

FIG. 6 illustrates an advance correlating notification (ADVCN) process 600 utilized to predict a branch target address of an indirect branch instruction in accordance with another embodiment. At block 602 instructions are fetched and received in the instruction fetch stage 214. At block 604, a determination is made whether a received instruction is an ADVCN Rm instruction. If the instruction is an ADVCN Rm instruction the process 600 proceeds to block 606. At block 606, the ADVCN Rm instruction advances through the processor pipeline and at the execution stage 222 causes the value stored in the ADVCN specified Rm register to be stored in the ADVCN register 508 to be used in the decode and ADVCN stage 216. The process 600 then returns to await the next instruction. Returning to block 604, if the received instruction is not an ADVCN Rm instruction, the process 600 proceeds to block 610. At block 610, a determination is made whether the received instruction is an indirect branch Rm instruction, such as a BX Rm instruction. If the received instruction is not an indirect branch Rm instruction, the process 600 returns to await the next instruction. If the received instruction is an indirect branch instruction, the process 600 proceeds to block 612. At block 612, a determination is made whether a valid ADVCN notice is asserted. If a valid ADVCN notice is asserted, then the process 600 proceeds to block 614. At block 614, during the decode and ADVCN stage 216, the ADVCN Rm value stored in the ADVCN register is selected. At block 616, a Ptag is generated as a hash of the selected value and the current PC value and stored in a Ptag register. At block 618, the Ptag, selected from the Ptag register, is looked up in a predictor circuit to find a predicted branch target address (BTA) and store it in a branch target address register (BTAR). At block 620, the BTA value stored in the BTAR is used to fetch the next instruction at the predicted BTA. The process 600 then returns to await the next instruction. Returning to block 612, where the determination is that a valid ADVCN notice is not asserted, the process 600 proceeds to block 622. At block 622, a branch history value is selected from a branch history circuit. The process 600 uses the selected branch history value in blocks 616-620 to predict the branch target address and then return to await the next instruction.

The methods described in connection with the embodiments disclosed herein may be embodied in hardware and used by software from a memory module that stores non-transitory signals executed by a processor. The software may support execution of the hardware as described herein or may be used to emulate the methods and apparatus to extend branch target hints as described herein. The software module may reside in random access memory (RAM), flash memory, read only memory (ROM), electrically programmable read only memory (EPROM), hard disk, a removable disk, tape, compact disk read only memory (CD-ROM), or any other form of storage medium known in the art. A storage medium may be coupled to the processor such that the processor can read information from, and in some cases write information to, the storage medium. The storage medium coupling to the processor may be a direct coupling integral to a circuit implementation or may utilize one or more interfaces, supporting direct accesses or data streaming using down loading techniques.

While the present invention has been disclosed in a presently preferred context, it will be recognized that the present teachings may be adapted to a variety of contexts consistent with this disclosure and the claims that follow.

## Claims

1. A method comprising:
predicting a storage address for a second instruction wherein the second instruction is an indirect branch instruction, based on contents of a first program accessible register, PAR, specified in a first instruction wherein the first instruction is an advance correlating notice, ADVCN, instruction, the ADVCN instruction specifying the PAR and wherein a value stored in the first PAR correlates with a target address stored in a second PAR, the second PAR specified in the indirect branch instruction and wherein the value is different than the target address;
the method further comprising:
receiving an instruction (602) and determining (604) whether the received instruction is the ADVCN instruction or the indirect branch instruction; wherein
if the received instruction is the ADVCN instruction, the method comprises asserting a valid advance notice (509) and holding the value stored in the first PAR;
wherein on receipt of the indirect branch instruction and if the valid advance notice (509) is asserted, the method comprises predicting the storage address based on the stored value; and
fetching information at the predicted storage address prior to execution of the indirect branch instruction.

2. The method of claim 1, wherein the value stored in the first PAR correlates indirectly through a third PAR to the target address specified by the second PAR.

3. The method of claim 1, comprising using the value stored in the first PAR by at least one instruction prior to the second instruction to generate the target address in the second PAR.

4. The method of claim 1 further comprising:
executing the second instruction;
comparing the predicted storage address with a fetch address determined from the execution of the second instruction to produce comparison results; and
updating a history storage of the comparison results to improve correlation between the value stored in the first PAR and the target address.

5. The method of claim 1, wherein the first PAR and second PAR are registers selected from a general purpose register, GPR file.

6. The method of claim 1 further comprising:
predicting an evaluation result to branch to the target address for the indirect branch instruction, wherein the prediction is based on the value stored in the program accessible register, PAR specified in the first instruction,

7. The method of claim 6, wherein the value stored in the specified PAR correlates indirectly through a third PAR to the taken evaluation of the branch instruction that uses the second PAR to identify the target address.

8. The method of claim 6 further comprising:
evaluating the execution of the indirect branch instruction to determine whether the branch to the target address is taken; and
updating a history storage of evaluation results to improve correlation between the value stored in the specified PAR and the taken evaluation of the branch instruction.

9. The method of claim 6 further comprising:
decoding the indirect branch instruction to initiate predicting the evaluation result to branch to the target address.

10. The method of claim 6, wherein predicting comprises:
generating a Ptag as a hash of the value stored in the specified PAR and a current program counter value; and
generating the target address based on the generated Ptag.

11. The method of claim 10, wherein the target address is generated by looking up the generated Ptag in a predictor circuit to find the target address.

12. The method of claim 6, wherein the target address is the next sequential address following the branch instruction.

13. An apparatus for speculatively fetching instructions, the apparatus comprising:
means for predicting a storage address for a second instruction wherein the second instruction is an indirect branch instruction, based on contents of a first program accessible register, PAR, specified in a first instruction wherein the first instruction is an advance correlating notice, ADVCN, instruction, the ADVCN instruction specifying the PAR and wherein a value stored in the first PAR correlates with a target address stored in a second PAR, the second PAR specified in the indirect branch instruction and wherein the value is different than the target address;
means for receiving an instruction and means for determining whether the received instruction is the ADVCN instruction or the indirect branch instruction;
means for asserting a valid advance notice (509) and means for holding the value stored in the first PAR if the received instruction is the ADVCN instruction;
wherein on receipt of the indirect branch instruction, predicting the storage address based on the stored value if the valid advance notice (509) is asserted; and
means for fetching information at the predicted storage address prior to execution of the indirect branch instruction.

14. A computer readable non-transitory medium carrying a computer program stored thereon, said program comprising computer executable instructions adapted to perform the method steps of any of claims 1 to 12 when executed by the apparatus of claim 13.

## Patentansprüche

1. Ein Verfahren, aufweisend:
Voraussagen einer Speicheradresse für einen zweiten Befehl, wobei der zweite Befehl ein indirekter Verzweigungsbefehl ist, basierend auf dem Inhalt eines ersten programmzugreifbaren Registers (Program Accessible Register bzw. PAR), das in einem ersten Befehl spezifiziert wird, wobei der erste Befehl ein Vorauskorrelationshinweis (Advance Correlating Notice bzw. ADVCN)-Befehl ist, wobei der ADVCN-Befehl das PAR spezifiziert und wobei ein in dem ersten PAR gespeicherter Wert mit einer in einem zweiten PAR gespeicherten Zieladresse korreliert, wobei das zweite PAR in dem indirekten Verzweigungsbefehl spezifiziert wird und wobei der Wert verschieden ist von der Zieladresse,
wobei das Verfahren weiterhin aufweist:
Empfangen eines Befehls (602) und Bestimmen (604), ob der empfangene Befehl der ADVCN-Befehl oder der indirekte Verzweigungsbefehl ist,
wobei, wenn der empfangene Befehl der ADVCN-Befehl ist, das Verfahren das Ausgeben eines gültigen Voraushinweises (509) und das Halten des in dem ersten PAR gespeicherten Werts aufweist,
wobei beim Empfang des indirekten Verzweigungsbefehls und wenn der gültige Voraushinweis (509) ausgegeben wird, das Verfahren das Voraussagen der Speicheradresse basierend auf dem gespeicherten Wert aufweist, und
Abrufen von Informationen von der vorausgesagten Speicheradresse vor dem Ausführen des indirekten Verzweigungsbefehls.

2. Verfahren nach Anspruch 1, wobei der in dem ersten PAR gespeicherte Wert indirekt über ein drittes PAR mit der durch das zweite PAR spezifizierten Zieladresse korreliert.

3. Verfahren nach Anspruch 1, das das Verwenden des in dem ersten PAR gespeicherten Werts um wenigstens einen Befehl vor dem zweiten Befehl für das Erzeugen der Zieladresse in dem zweiten PAR aufweist.

4. Verfahren nach Anspruch 1, das weiterhin aufweist:
Ausführen des zweiten Befehls,
Vergleichen der vorausgesagten Speicheradresse mit einer Abrufadresse, die aus der Ausführung des zweiten Befehls bestimmt wird, um Vergleichsergebnisse zu erzeugen, und
Aktualisieren eines Verlaufsspeichers der Vergleichsergebnisse, um die Korrelation zwischen dem in dem ersten PAR gespeicherten Wert und der Zieladresse zu verbessern.

5. Verfahren nach Anspruch 1, wobei das erste PAR und das zweite PAR Register sind, die aus einer Allgemeinregister (General Purpose Register bzw. GPR)-Datei ausgewählt sind.

6. Verfahren nach Anspruch 1, das weiterhin aufweist:
Voraussagen eines Bewertungsergebnisses für das Verzweigen zu der Zieladresse für den indirekten Verzweigungsbefehl, wobei die Voraussage auf dem Wert basiert, der in dem in dem ersten Befehl spezifizierten PAR gespeichert ist.

7. Verfahren nach Anspruch 6, wobei der in dem spezifizierten PAR gespeicherte Wert indirekt über ein drittes PAR mit der getroffenen Bewertung des Verzweigungsbefehls korreliert, der das zweite PAR für das Identifizieren der Zieladresse verwendet.

8. Verfahren nach Anspruch 6, das weiterhin aufweist:
Bewerten der Ausführung des indirekten Verzweigungsbefehls, um zu bestimmen, ob die Verzweigung zu der Zieladresse genommen wird, und
Aktualisieren eines Verlaufsspeichers von Bewertungsergebnissen, um die Korrelation zwischen dem in dem spezifizierten PAR gespeicherten Wert und der getroffenen Bewertung des Verzweigungsbefehls zu verbessern.

9. Verfahren nach Anspruch 6, das weiterhin aufweist:
Decodieren des indirekten Verzweigungsbefehls, um eine Voraussage des Bewertungsergebnisses für die Verzweigung zu der Zieladresse einzuleiten.

10. Verfahren nach Anspruch 6, wobei das Voraussagen aufweist:
Generieren eines Ptag als eines Hash des in dem spezifizierten PAR gespeicherten Werts und eines aktuellen Programmzählerwerts, und
Generieren der Zieladresse basierend auf dem generierten Ptag.

11. Verfahren nach Anspruch 10, wobei die Zieladresse durch das Nachschlagen des generierten Ptag in einer Voraussageschaltung generiert wird, um die Zieladresse zu finden.

12. Verfahren nach Anspruch 6, wobei die Zieladresse die nächste sequentielle Adresse, die auf den Verzweigungsbefehl folgt, ist.

13. Eine Vorrichtung für das spekulative Abrufen von Befehlen, wobei die Vorrichtung aufweist:
Mittel zum Voraussagen einer Speicheradresse für einen zweiten Befehl, wobei der zweite Befehl ein indirekter Verzweigungsbefehl ist, basierend auf dem Inhalt eines ersten programmzugreifbaren Registers (Program Accessible Register bzw. PAR), das in einem ersten Befehl spezifiziert wird, wobei der erste Befehl ein Vorauskorrelationshinweis (Advance Correlating Notice bzw. ADVCN)-Befehl ist, wobei der ADVCN-Befehl das PAR spezifiziert und wobei ein in dem ersten PAR gespeicherter Wert mit einer in einem zweiten PAR gespeicherten Zieladresse korreliert, wobei das zweite PAR in dem indirekten Verzweigungsbefehl spezifiziert wird und wobei der Wert verschieden ist von der Zieladresse,
Mittel zum Empfangen eines Befehls und Mittel zum Bestimmen, ob der empfangene Befehl der ADVCN-Befehl oder der indirekte Verzweigungsbefehl ist,
Mittel zum Ausgeben eines gültigen Voraushinweises (509) und Mittel zum Halten des in dem ersten PAR gespeicherten Werts, wenn der empfangene Befehl der ADVCN-Befehl ist,
Mittel zum, beim Empfang des indirekten Verzweigungsbefehls, Voraussagen der Speicheradresse basierend auf dem gespeicherten Wert, wenn der gültige Voraushinweis (509) ausgegeben wird, und
Mittel zum Abrufen von Informationen von der vorausgesagten Speicheradresse vor dem Ausführen des indirekten Verzweigungsbefehls.

14. Ein computerlesbares, nicht-transitorisches Medium mit einem darauf gespeicherten Computerprogramm, wobei das Programm computerausführbare Befehle aufweist, die ausgebildet sind zum Durchführen der Verfahrensschritte gemäß den Ansprüchen 1 bis 12, wenn sie durch die Vorrichtung von Anspruch 13 ausgeführt werden.

## Revendications

1. Procédé comprenant :
la prédiction d'une adresse de stockage pour une seconde instruction, la seconde instruction étant une instruction de branchement indirect, basée sur le contenu d'un premier registre accessible au programme, PAR, spécifié dans une première instruction dans lequel la première instruction est une instruction ADVCN de notification avancée de corrélation, l'instruction ADVCN spécifiant le PAR et dans lequel une valeur stockée dans le premier PAR est en corrélation avec une adresse cible stockée dans un deuxième PAR, le deuxième PAR étant spécifié dans l'instruction de branchement indirect et dans lequel la valeur est différente de l'adresse cible;
le procédé comprenant en outre les étapes consistant à :
recevoir une instruction (602) et déterminer (604) si l'instruction reçue est l'instruction ADVCN ou l'instruction de branchement indirect ; dans lequel
si l'instruction reçue est l'instruction ADVCN, le procédé comprend les étapes consistant à affirmer une notification avancée valable (509) et à conserver la valeur stockée dans le premier PAR ;
dans lequel, à la réception de l'instruction de branchement indirect et si la notification avancée valide (509) est affirmée, le procédé comprend la prédiction de l'adresse de stockage sur la base de la valeur stockée ; et
extraire des informations à l'adresse de stockage prédite avant l'exécution de l'instruction de branchement indirect.

2. Procédé selon la revendication 1, dans lequel la valeur stockée dans le premier PAR est corrélée indirectement par l'intermédiaire d'un troisième PAR à l'adresse cible spécifiée par le deuxième PAR.

3. Procédé selon la revendication 1, comprenant l'utilisation de la valeur stockée dans le premier PAR par au moins une instruction antérieure à la deuxième instruction pour générer l'adresse cible dans le deuxième PAR.

4. Procédé selon la revendication 1, comprenant en outre les étapes consistant à :
exécuter la deuxième instruction ;
comparer l'adresse de stockage prédite avec une adresse d'extraction déterminée à partir de l'exécution de la deuxième instruction pour produire des résultats de comparaison ; et
mettre à jour un stockage d'historique des résultats de comparaison pour améliorer la corrélation entre la valeur stockée dans le premier PAR et l'adresse cible.

5. Procédé selon la revendication 1, dans lequel le premier PAR et le second PAR sont des registres sélectionnés à partir d'un fichier GPR de registre à usage général.

6. Procédé selon la revendication 1, comprenant en outre :
la prédiction d'un résultat d'évaluation pour réaliser un branchement à l'adresse cible de l'instruction de branchement indirect, la prédiction étant basée sur la valeur stockée dans le registre PAR accessible au programme spécifié dans la première instruction,

7. Procédé selon la revendication 6, dans lequel la valeur stockée dans le PAR spécifié est corrélée indirectement par le biais d'un troisième PAR à l'évaluation prise de l'instruction de branchement qui utilise le second PAR pour identifier l'adresse cible.

8. Procédé selon la revendication 6, comprenant en outre les étapes consistant à :
évaluer l'exécution de l'instruction de branchement indirect pour déterminer si le branchement vers l'adresse cible est pris ; et
mettre à jour un stockage historique des résultats d'évaluation pour améliorer la corrélation entre la valeur stockée dans le PAR spécifié et l'évaluation prise de l'instruction de branchement.

9. Procédé selon la revendication 6, comprenant en outre les étapes consistant à :
décoder l'instruction de branchement indirect pour lancer la prédiction du résultat de l'évaluation afin de faire un branchement vers l'adresse cible.

10. Procédé selon la revendication 6, dans lequel la prédiction comprend les étapes consistant à :
générer une balise Ptag sous la forme d'un hachage de la valeur stockée dans le PAR spécifié et d'une valeur de compteur de programme en cours ; et
générer l'adresse cible en fonction de la balise Ptag générée.

11. Procédé selon la revendication 10, dans lequel l'adresse cible est générée en recherchant la balise Ptag générée dans un circuit prédicteur pour trouver l'adresse cible.

12. Procédé selon la revendication 6, dans lequel l'adresse cible est l'adresse séquentielle suivante qui suit l'instruction de branchement.

13. Appareil pour rechercher de manière spéculative des instructions, l'appareil comprenant :
des moyens pour prédire une adresse de stockage pour une seconde instruction, la seconde instruction étant une instruction de branchement indirect, basée sur le contenu d'un premier registre accessible au programme, PAR, spécifié dans une première instruction dans lequel la première instruction est une instruction ADVCN de notification avancée de corrélation, l'instruction ADVCN spécifiant le PAR et dans lequel une valeur stockée dans le premier PAR est en corrélation avec une adresse cible stockée dans un deuxième PAR, le deuxième PAR étant spécifié dans l'instruction de branchement indirect et dans lequel la valeur est différente de l'adresse cible ;
des moyens pour recevoir une instruction et des moyens pour déterminer si l'instruction reçue est l'instruction ADVCN ou l'instruction de branchement indirect ;
des moyens pour affirmer une notification avancée valide (509) et des moyens pour conserver la valeur stockée dans le premier PAR si l'instruction reçue est l'instruction ADVCN ;
dans lequel, à la réception de l'instruction de branchement indirect, la prédiction de l'adresse de stockage sur la base de la valeur stockée si la notification avancée valide (509) est affirmée ; et
des moyens pour extraire des informations à l'adresse de stockage prédite avant l'exécution de l'instruction de branchement indirect.

14. Support non transitoire lisible par ordinateur portant un programme d'ordinateur stocké dessus, ledit programme comprenant des instructions exécutables par ordinateur adaptées pour effectuer les étapes de procédé de l'une quelconque des revendications 1 à 12 lorsqu'elles sont exécutées par l'appareil de la revendication 13.
